# FASCICULE DE BREVET EUROPEEN

(11) **EP 3 583 359 B1**
(45) Date de publication et mention de la délivrance du brevet: **02.08.2023**
(21) Numéro de dépôt: 18707095.8
(22) Date de dépôt: 07.02.2018
(51) Int. Cl.: F24F 5/00, F24F 6/12, F24F 7/007, F04D 19/00, F04D 25/08, F04D 29/70

(54) **VENTILATEUR DOMESTIQUE SUR PIED**
STANDING HOUSEHOLD VENTILATOR
STANDVENTILATOR FÜR DEN HAUSHALT

(30) Priorité: 17.02.2017 FR 1751312
(43) Date de publication de la demande: 25.12.2019
(73) Titulaire: SEB S.A., 69130 Ecully (FR)
(72) Inventeur: GIRARD, Bruno, 42410 Saint-Michel-sur-Rhone (FR); COURTINEL, Stéphane, 42330 Chamboeuf (FR)
(74) Mandataire: SEB Développement
(86) Numéro de dépôt international: PCT/FR2018/050307
(87) Numéro de publication internationale: WO 2018/150124

(56) Documents cités:
- EP-A2- 2 722 602
- WO-A1-2014/087078
- WO-A1-2015/167821
- CN-U- 202 360 422
- JP-A- 2011 137 396
- US-A- 3 997 115
- US-A- 5 370 500
- US-A1- 2005 189 766
- US-A1- 2008 169 575
- US-A1- 2016 327 066

## Description

La présente invention concerne de manière générale un ventilateur domestique, avec une fonction de dispersion d'un agent répulsif.

Il est connu dans l'art antérieur des ventilateurs avec des dispositifs de production et de dispersion d'un aérosol dans le flux d'air de ventilation, comme celui présenté dans le document JP 2011137396A, avec une unité de production d'un aérosol embarquée sur une grille de protection de l'hélice. En contrepartie, ce système présente notamment l'inconvénient d'être complexe car il faut embarquer l'unité de production d'un aérosol sur la grille de protection, et cela perturbe en plus le flux d'air de ventilation en formant un obstacle juste devant l'hélice. Le document US 2016/327066 A1 montre un ventilateur selon le préambule de la revendication 1.

Un but de la présente invention est de répondre aux inconvénients de l'art antérieur mentionnés ci-dessus et en particulier, tout d'abord, de proposer un ventilateur avec une unité de production d'aérosol, qui soit simple à fabriquer et qui ne perturbe pas le flux d'air de ventilation.

Pour cela l'invention est définie par un ventilateur selon la revendication 1. dispositif électrique de génération d'un aérosol est directement intégrée dans le boîtier de commande. Il ne faut donc pas prévoir de fixation spécifique pour le dispositif électrique de génération d'un aérosol (il est solidaire du boîtier de commande) : la fabrication est simplifiée. De plus, le dispositif électrique de génération d'un aérosol n'est pas dans le flux d'air de ventilation (puisqu'il est solidaire du boîtier de commande attaché au pied), il ne perturbe donc pas le flux d'air de ventilation.

Avantageusement, l'hélice présente un rayon, et le boîtier de commande forme un ensemble distinct de l'unité de ventilation agencé à une distance de l'unité de ventilation supérieure au rayon de l'hélice. En d'autres termes, le boîtier de commande forme un bloc sur lequel on trouve au moins un bouton de commande (un bouton marche / arrêt, et/ou un bouton sélecteur de vitesse de ventilation) et la cavité pour le réservoir amovible. Ce bloc se trouve donc à une distance supérieure au rayon de l'hélice (par rapport à l'axe de rotation de l'hélice) pour permettre un accès direct aux commandes de l'appareil, et pour éviter de perturber le flux de ventilation.

Avantageusement, l'unité de ventilation est montée pivotante autour du pied, le ventilateur comprend une unité d'oscillation, agencée pour faire osciller l'unité de ventilation autour d'une position médiane, et le boîtier de commande solidaire du pied est statique. Le boîtier de commande n'est pas embarqué avec l'unité de ventilation dans son mouvement oscillant de balayage. Le boîtier de commande reste donc solidaire et ancré avec le pied, la conception est donc simplifiée.

Avantageusement, l'hélice présente un diamètre, et la cavité est agencée à une distance de l'unité de ventilation inférieure au diamètre de l'hélice, mais supérieure au rayon de l'hélice. La cavité est donc située dans une zone proche de l'hélice, où le flux d'air de ventilation est significatif, si bien que l'aérosol produit par le dispositif électrique de génération d'un aérosol est entraîné avec le flux d'air, pour une diffusion efficace dans la pièce où se trouve le ventilateur.

Selon l'invention, le capot mobile comprend une pluralité de trous, pour permettre un entrainement de l'aérosol vers l'hélice. Même si le réservoir amovible est "enfermé" dans la cavité, l'aérosol peut être entraîné avec le flux d'air au travers des trous du capot mobile.

Selon l'invention, le boîtier de commande comprend une paroi de fond formant la cavité et comprenant au moins un orifice pour permettre à un flux d'air de traverser la cavité fermée par le capot mobile. En raison des trous sur le capot mobile et sur la paroi de fond de la cavité, le flux d'air peut traverser de part en part la cavité et entraîner l'aérosol produit par le dispositif électrique de génération d'un aérosol.

Avantageusement, le raccord d'accouplement est pivotant par rapport au boîtier de commande, de sorte à autoriser un mouvement de dégagement hors de la cavité au réservoir amovible accouplé au raccord d'accouplement. La mise en place est simplifiée pour l'utilisateur qui peut faire pivoter le réservoir amovible et le sortir partiellement de la cavité pour le saisir et l'accoupler/désaccoupler au raccord d'accouplement. On peut envisager une liaison par vissage, ou par quart de tour par exemple entre le réservoir amovible et le raccord d'accouplement.

Avantageusement, le raccord d'accouplement comprend deux portions de filetage, chacune montée sur une patte élastique, pour s'accoupler avec le réservoir amovible. Les pattes élastiques peuvent alors se déformer pour recevoir un réservoir amovible qui aurait une interface d'accouplement un peu plus grosse que celle prévue au nominal. Par exemple, on peut prévoir un accouplement nominal de ∅22 mm, et les pattes élastiques peuvent autoriser d'accoupler un réservoir amovible avec un ∅23 mm par exemple. Cela permet de recevoir une pluralité de réservoirs amovibles et augmenter la diversité des consommables acceptés par le ventilateur.

Avantageusement, le ventilateur comprend un adaptateur amovible, agencé pour s'accoupler avec le raccord d'accouplement, de sorte à offrir une interface de fixation de réservoir amovible différente de celle du raccord d'accouplement. Cela permet de recevoir une pluralité de réservoirs amovibles et encore d'augmenter la diversité des consommables acceptés par le ventilateur.

Avantageusement, l'adaptateur amovible comprend deux portions de filetage, chacune montée sur une patte flexible, pour s'accoupler avec le réservoir amovible. Les pattes flexibles peuvent alors se déformer pour recevoir un réservoir amovible qui aurait une interface d'accouplement un peu plus grosse que celle prévue au nominal. Par exemple, on peut prévoir un accouplement nominal de ∅18 mm, et les pattes flexibles peuvent autoriser d'accoupler un réservoir amovible avec un ∅19 mm par exemple. Cela permet de recevoir une pluralité de réservoirs amovibles et augmenter la diversité des consommables acceptés par le ventilateur.

Avantageusement, le réservoir amovible comprend un liquide qui produit un aérosol répulsif à insectes. On peut aussi prévoir un liquide parfumé.

Avantageusement, le dispositif électrique de génération d'un aérosol comprend une résistance chauffante.

Avantageusement, le boîtier de commande comprend un bouton de commande du dispositif électrique de génération d'un aérosol.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un vue générale d'un ventilateur selon l'invention et une vue détaillée d'un boîtier de commande ;
- la figure 2 représente une série de détails du ventilateur de la figure 1, au niveau d'un dispositif électrique de génération d'un aérosol ;
- la figure 3 représente un adaptateur amovible du dispositif électrique de génération d'un aérosol.

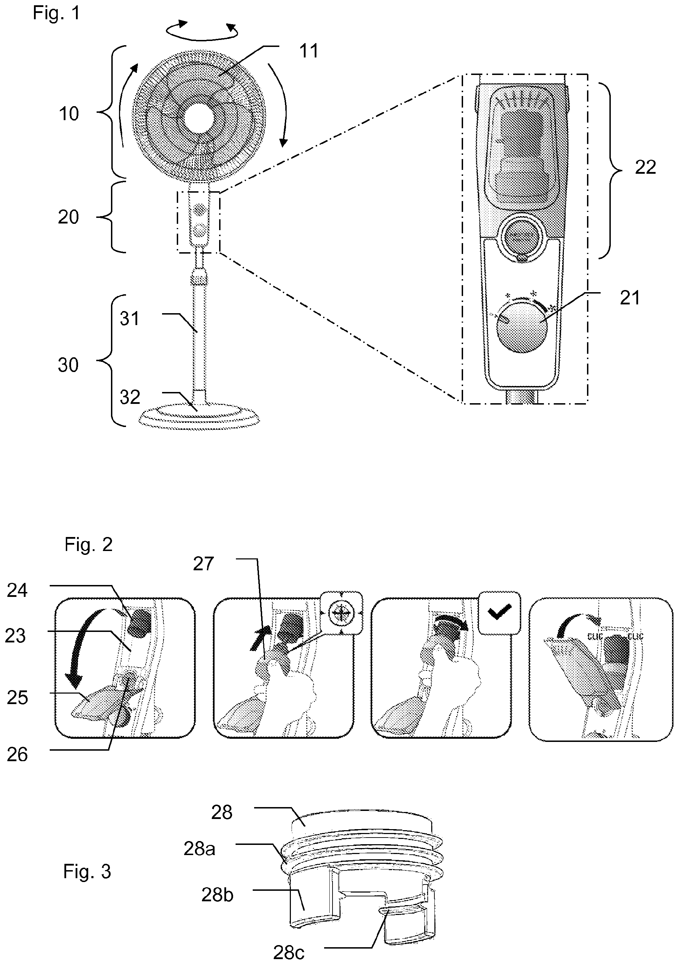

La figure 1 représente un ventilateur comprenant une unité de ventilation 10 avec une hélice 11 mobile en rotation, au moins un pied 30 (formé par un socle 32 et un montant 31), un boîtier de commande 20 solidaire du pied 30 avec un bouton de commande 21 de l'unité de ventilation, un dispositif électrique 22 de génération d'un aérosol avec un raccord d'accouplement 24 (visible figure 2) agencé pour s'accoupler avec un réservoir amovible 27 (visible figure 2). Le boîtier de commande 20 comprend une cavité 23 (visible figure 2) agencée pour recevoir le réservoir amovible 27 lorsqu'il est accouplé avec le raccord d'accouplement 24, et un capot mobile 25 (visible figure 2) agencé pour fermer la cavité 23.

L'unité de ventilation 10 comprend donc l'hélice 11 pour créer un flux d'air de ventilation, elle est également montée pivotante par rapport au montant 31, pour pouvoir osciller autour d'une position médiane, de sorte à augmenter le volume balayé par le flux d'air de ventilation si besoin. A cet effet, il peut être prévu un mécanisme d'oscillation que l'on peut enclencher ou non, de sorte à offrir à l'utilisateur la possibilité d'utiliser le ventilateur avec l'unité de ventilation 10 statique ou oscillante.

L'unité de ventilation 10 est distincte du boîtier de commande 20. Le boîtier de commande 20 se trouve à bonne distance de cette dernière, c'est-à-dire que le boîtier de commande 20 est en dessous de la grille de protection de l'hélice 11. Cela permet d'accéder aisément au bouton de commande, ainsi qu'à la cavité 23 pour remplacer le réservoir amovible 27. La cavité se trouve juste en dessous de l'hélice 11, si bien que le flux d'air de ventilation est significatif dans cette zone, et peut entraîner efficacement l'aérosol généré.

L'aérosol créé à partir du liquide du réservoir amovible 27 peut être un répulsif à insectes (des moustiques), mais peut aussi être un parfum ou une substance destinée à donner une ambiance olfactive particulière dans la pièce où est utilisé le ventilateur.

Comme montré sur la vue de droite de la figure 1, le boîtier de commande comprend le bouton de commande 21 qui permet de démarrer l'unité de ventilation, mais aussi de régler la vitesse de ventilation.

La figure 2 montre en détail le dispositif électrique 22 de génération d'un aérosol, et en particulier une série de vues qui montre l'installation du réservoir amovible 27 dans la cavité 23.

A cet effet, l'utilisateur doit ouvrir la cavité 23 en basculant le capot mobile 25, pour pouvoir accoupler le réservoir amovible 27 au raccord d'accouplement 24 en le vissant, et referme ensuite le capot mobile 25. Comme le montre la dernière vue, on peut prévoir des accouplements élastiques pour générer un bruit d'enclenchement.

Une fois le réservoir amovible installé, l'utilisateur peut allumer le dispositif électrique 22 de génération d'un aérosol, en actionnant un bouton 26 du boîtier de commande 20. Le liquide du réservoir amovible 27 est conduit par capillarité vers une résistance chauffante, qui provoque une vapeur par évaporation / vaporisation ou une génération de fines gouttelettes qui se trouvent alors entraînées dans le flux d'air de ventilation. En effet, le capot mobile 25, et la paroi de fond de la cavité 23 sont troués, ce qui permet à un flux d'air de traverser la cavité 23.

La figure 3 représente un adaptateur amovible 28 qui peut venir s'accoupler avec le raccord d'accouplement 24, pour augmenter les types de réservoirs amovibles 27 qui peuvent être utilisés. A cet effet, l'adaptateur amovible 28 comprend :
- une portion filetée 28a qui se visse dans le raccord d'accouplement 24,
- deux pattes flexibles 28b,
- deux portions de filetage 28c, chacune agencée sur une patte flexible 28b.

En conséquence, l'adaptateur amovible 28 peut recevoir par vissage des réservoirs amovibles avec un diamètre nominal de ∅18 mm par exemple, mais aussi ∅19 mm si besoin, car les pattes flexibles 28b peuvent s'écarter.

Le raccord d'accouplement 24 comprend aussi deux pattes élastiques avec chacune une portion de filetage pour pouvoir s'accoupler avec par exemple un réservoir amovible 27 de ∅22 mm nominal, mais également un réservoir amovible 27 de ∅23 mm.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Ventilateur comprenant :
- une unité de ventilation (10) avec une hélice (11) mobile en rotation,
- au moins un pied (30),
- un boîtier de commande (20) solidaire du pied (30), avec au moins un bouton de commande (21) de l'unité de ventilation (10), le boitier de commande (20) comprenant une cavité (23) agencée pour recevoir un réservoir amovible (27) lorsqu'il est accouplé avec le raccord d'accouplement (24)
- un dispositif électrique (22) de génération d'un aérosol avec un raccord d'accouplement (24) agencé pour s'accoupler avec le réservoir amovible (27), où le boîtier de commande (20) comprend un capot mobile (25) agencé pour fermer la cavité (23),
et où le boîtier de commande (20) comprend une paroi de fond formant la cavité (23),
**caractérisé en ce que**
le capot (25) comprend une pluralité de trous, pour permettre un entrainement de l'aérosol vers l'hélice (11) ; et **en ce que**
la paroi de fond formant la cavité (23) comprend au moins un orifice pour permettre à un flux d'air de traverser la cavité (23) fermée par le capot mobile (25).

2. Ventilateur selon la revendication précédente, dans lequel l'unité de ventilation (10) est montée pivotante autour du pied (30), le ventilateur comprenant une unité d'oscillation, agencée pour faire osciller l'unité de ventilation (10) autour d'une position médiane, et dans lequel le boîtier de commande (20) solidaire du pied (30) est statique.

3. Ventilateur selon l'une des revendications précédentes, dans lequel l'hélice (11) présente un diamètre, et dans lequel la cavité (23) est agencée à une distance de l'unité de ventilation (10) inférieure au diamètre de l'hélice (11).

4. Ventilateur selon l'une des revendications précédentes, dans lequel le raccord d'accouplement (24) est pivotant par rapport au boîtier de commande (20), de sorte à autoriser un mouvement de dégagement hors de la cavité (23) au réservoir amovible (27) accouplé au raccord d'accouplement (24).

5. Ventilateur selon l'une des revendications précédentes, dans lequel le raccord d'accouplement (24) comprend deux portions de filetage, chacune montée sur une patte élastique.

6. Ventilateur selon l'une des revendications précédentes, comprenant un adaptateur amovible (28), agencé pour s'accoupler avec le raccord d'accouplement (24), de sorte à offrir une interface de fixation de réservoir amovible (27) différente de celle du raccord d'accouplement (24).

7. Ventilateur selon la revendication précédente, dans lequel l'adaptateur amovible (28) comprend deux portions de filetage (28c), chacune montée sur une patte flexible (28b).

8. Ventilateur selon l'une des revendications précédentes, dans lequel le réservoir amovible (27) comprend un liquide qui produit un aérosol répulsif à insectes.

9. Ventilateur selon l'une des revendications précédentes, dans lequel le dispositif électrique (22) de génération d'un aérosol comprend une résistance chauffante.

10. Ventilateur selon l'une des revendications précédentes, dans lequel le boîtier de commande (20) comprend un bouton (26) de commande du dispositif électrique (22) de génération d'un aérosol.

## Patentansprüche

1. Lüfter, umfassend:
- eine Lüftungseinheit (10) mit einem drehbeweglichen Propeller (11),
- mindestens einen Fuß (30),
- ein mit dem Fuß (30) fest verbundenes Steuergehäuse (20) mit mindestens einem Steuerknopf (21) der Lüftungseinheit (10), wobei das Steuergehäuse (20) einen Hohlraum (23) umfasst, der zur Aufnahme eines abnehmbaren Behälters (27) angeordnet ist, wenn er mit dem Kopplungsanschluss (24) gekoppelt ist
- eine elektrische Vorrichtung (22) zur Erzeugung eines Aerosols mit einem Kopplungsanschluss (24), der zum Koppeln mit dem abnehmbaren Behälter (27) angeordnet ist, wobei das Steuergehäuse (20) eine bewegliche Haube (25) umfasst, die zum Verschließen des Hohlraums (23) angeordnet ist, und wobei das Steuergehäuse (20) eine Bodenwand umfasst, die den Hohlraum (23) bildet,
**dadurch gekennzeichnet, dass**
die Haube (25) eine Vielzahl von Löchern umfasst, um eine Mitnahme des Aerosols in Richtung des Propellers (11) zu ermöglichen;
und dass die den Hohlraum bildende Bodenwand (23) mindestens eine Öffnung umfasst, um einem Luftstrom zu ermöglichen, den durch die bewegliche Haube (25) verschlossenen Hohlraum (23) zu durchqueren.

2. Lüfter nach dem vorstehenden Anspruch, wobei die Lüftungseinheit (10) um den Fuß (30) schwenkbar angebracht ist, wobei der Lüfter eine Oszillationseinheit umfasst, die angeordnet ist, um die Lüftungseinheit (10) um eine Mittelposition oszillieren zu lassen, und wobei das mit dem Fuß (30) fest verbundene Steuergehäuse (20) statisch ist.

3. Lüfter nach einem der vorstehenden Ansprüche, wobei der Propeller (11) einen Durchmesser aufweist, und wobei der Hohlraum (23) in einem Abstand von der Lüftereinheit (10) angeordnet ist, der kleiner als der Durchmesser des Propellers (11) ist.

4. Lüfter nach einem der vorstehenden Ansprüche, wobei der Kopplungsanschluss (24) in Bezug auf das Steuergehäuse (20) schwenkbar ist, um dem mit dem Kopplungsanschluss (24) gekoppelten abnehmbaren Behälter (27) eine Ausrückbewegung aus dem Hohlraum (23) zu ermöglichen.

5. Lüfter nach einem der vorstehenden Ansprüche, wobei der Kopplungsanschluss (24) zwei Gewindeabschnitte umfasst, die jeweils auf einer elastischen Lasche angebracht sind.

6. Lüfter nach einem der vorstehenden Ansprüche, umfassend einen abnehmbaren Adapter (28), der zur Kopplung mit dem Kopplungsanschluss (24) angeordnet ist, um eine Befestigungsschnittstelle (27) des abnehmbaren Behälters bereitzustellen, die sich von derjenigen des Kopplungsanschlusses (24) unterscheidet.

7. Lüfter nach dem vorstehenden Anspruch, wobei der abnehmbare Adapter (28) zwei Gewindeabschnitte (28c) umfasst, die jeweils auf einer flexiblen Lasche (28b) angebracht sind.

8. Lüfter nach einem der vorstehenden Ansprüche, wobei der abnehmbare Behälter (27) eine Flüssigkeit umfasst, die ein insektenabwehrendes Aerosol erzeugt.

9. Lüfter nach einem der vorstehenden Ansprüche, wobei die elektrische Vorrichtung (22) zur Erzeugung eines Aerosols einen Heizwiderstand umfasst.

10. Lüfter nach einem der vorstehenden Ansprüche, wobei das Steuergehäuse (20) einen Knopf (26) zum Steuern der elektrischen Vorrichtung (22) zur Erzeugung eines Aerosols umfasst.

## Claims

1. Fan comprising:
- a ventilation unit (10) with a rotatable impeller (11),
- at least one pedestal (30),
- a control unit (20) rigidly connected to the pedestal (30), with at least one control knob (21) for the ventilation unit (10), the control unit (20) comprising a cavity (23) arranged to receive a removable reservoir (27) when the latter is coupled with the coupling means (24),
- an electrical aerosol generation device (22) with a coupling means (24) arranged such that it couples with the removable reservoir (27), where the control unit (20) comprises a movable cap (25) arranged to close the cavity (23), and where the control unit (20) comprises a bottom wall forming the cavity (23),
**characterised in that**
the cap (25) comprises a plurality of holes, to enable a driving of the aerosol towards the impeller (11);
and **in that** the bottom wall forming the cavity (23) comprises at least one orifice to enable an airflow to pass through the cavity (23) closed by the movable cap (25).

2. Fan according to the preceding claim, in which the ventilation unit (10) is mounted such that it can pivot about the pedestal (30), the fan comprising an oscillation unit, arranged to make the ventilation unit (10) oscillate about a middle position, and in which the control unit (20) rigidly connected to the pedestal (30) is static.

3. Fan according to one of the preceding claims, in which the impeller (11) has a diameter, and in which the cavity (23) is separated from the ventilation unit (10) by a distance that is smaller than the diameter of the impeller (11).

4. Fan according to one of the preceding claims, in which the coupling means (24) can pivot in relation to the control unit (20), so as to allow the removable reservoir (27) coupled to the coupling means (24) to be released from the cavity (23).

5. Fan according to one of the preceding claims, in which the coupling means (24) comprises two threading portions, each one mounted on an elastic tab.

6. Fan according to one of the preceding claims, comprising a removable adapter (28), arranged such that it couples with the coupling means (24), so as to offer an attachment interface for the removable reservoir (27) that is different from that of the coupling means (24).

7. Fan according to the preceding claim, in which the removable adapter (28) comprises two threading portions (28c), each one mounted on an elastic tab (28b).

8. Fan according to one of the preceding claims, in which the removable reservoir (27) comprises a liquid which produces an insect-repelling aerosol.

9. Fan according to one of the preceding claims, in which the electrical aerosol generation device (22) comprises a heating resistor.

10. Fan according to one of the preceding claims, in which the control unit (20) comprises a control knob (26) for the electrical aerosol generation device (22).
